(19) Europäisches Patentamt
European Patent Office
Office européen des brevets

(11) **EP 4 347 102 B1**

(12) **EUROPÄISCHE PATENTSCHRIFT**

(45) Veröffentlichungstag und Bekanntmachung des Hinweises auf die Patenterteilung:
**26.02.2025   Patentblatt 2025/09**

(21) Anmeldenummer: **22730279.1**

(22) Anmeldetag: **24.05.2022**

(51) Internationale Patentklassifikation (IPC):
**B01J 8/00** (2006.01)      **B01J 8/06** (2006.01)
**B01J 19/00** (2006.01)

(52) Gemeinsame Patentklassifikation (CPC):
**B01J 8/06; B01J 8/001; B01J 8/008; B01J 8/065;**
**B01J 8/067; B01J 19/0053; B01J 19/006;**
B01J 2208/00017; B01J 2208/00026;
B01J 2208/00053; B01J 2208/00061;
B01J 2208/00176; B01J 2208/00212;
B01J 2208/00221; B01J 2208/00849;      (Forts.)

(86) Internationale Anmeldenummer:
**PCT/EP2022/064111**

(87) Internationale Veröffentlichungsnummer:
**WO 2022/248501 (01.12.2022 Gazette 2022/48)**

(54) **VERFAHREN ZUR HERSTELLUNG VON PHOSGEN**

METHOD FOR PREPARING PHOSGENE

PROCÉDÉ DE PRODUCTION DE PHOSGÈNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **27.05.2021   EP 21176199**

(43) Veröffentlichungstag der Anmeldung:
**10.04.2024   Patentblatt 2024/15**

(73) Patentinhaber: **BASF SE**
**67056 Ludwigshafen am Rhein (DE)**

(72) Erfinder:
• **OLBERT, Gerhard**
**67056 Ludwigshafen (DE)**
• **MATTKE, Torsten**
**67056 Ludwigshafen (DE)**

(74) Vertreter: **BASF IP Association**
**BASF SE**
**GBI - Z078**
**67056 Ludwigshafen (DE)**

(56) Entgegenhaltungen:
| | |
|---|---|
| EP-A1- 1 547 994 | EP-A1- 1 935 875 |
| EP-A1- 2 896 597 | WO-A1-03/072237 |
| WO-A1-2010/076208 | WO-A1-2012/132031 |
| WO-A1-95/26811 | CN-A- 109 382 045 |
| DE-A1- 10 144 857 | DE-A1- 102016 002 679 |
| DE-A1- 2 725 967 | DE-C- 853 587 |
| GB-A- 845 366 | US-A- 3 726 775 |
| US-A1- 2011 269 995 | |

(52) Gemeinsame Patentklassifikation (CPC): (Forts.)
B01J 2219/0002; B01J 2219/00247;
B01J 2219/00777

**Beschreibung**

Die Erfindung geht aus von einem Verfahren zur Herstellung von Phosgen durch Gasphasenreaktion von Chlor mit Kohlenmonoxid in Gegenwart eines Feststoffkatalysators in einem Rohrbündelreaktor mit von einem Reaktormantel umschlossenen Kontaktrohren, in denen der Feststoffkatalysator aufgenommen ist und senkrecht zu den Kontaktrohren angeordneten Umlenkblechen, die alternierend gegenüberliegende Durchtrittsöffnungen für ein flüssiges Temperiermedium, dass die Kontaktrohren umströmt, an der Innenwand des Reaktormantels aufweisen, wobei im Bereich der Durchtrittsöffnungen keine Kontaktrohren angeordnet sind, umfassend folgende Schritte:

(a) Zufuhr eines Kohlenmonoxid und Chlor enthaltenden Gasgemischs in den Rohrbündelreaktor, so dass das Reaktionsgemisch an einer Seite in die Kontaktrohre eintritt;

(b) Umsetzen des Kohlenmonoxids mit Chlor zu Phosgen in den Kontaktrohren zu einem phosgenhaltigen Produktstrom;

(c) Entnahme des phosgenhaltigen Produktstroms aus dem Rohrbündelreaktor,

wobei die Kontaktrohre von dem flüssigen Temperiermedium umströmt werden.

Phosgen ist ein wichtiger Hilfsstoff bei der Herstellung von Zwischen- und Endprodukten in nahezu allen Zweigen der Chemie. Das mengenmäßig größte Verwendungsgebiet ist die Herstellung von Diisocyanaten für die Polyurethanchemie, insbesondere von Toluylendiisocyanat und von 4,4'-Diisocyanat-diphenylmethan.

Großtechnisch wird Phosgen üblicherweise in einer katalytischen Gasphasenreaktion von Kohlenmonoxid und Chlor in Gegenwart eines Feststoffkatalysators, bevorzugt Aktivkohle, hergestellt. Die Reaktion ist stark exotherm und wird in der Regel in einem Rohrbündelreaktor nach dem in Ullmann's Encyclopedia of Industrial Chemistry, Wiley-VCH Verlag GmbH & Co. KGaA, Weinheim, Seiten 625 bis 626, DOI: 10.1002/14356007.a19_411 beschriebenen Verfahren durchgeführt.

Der in der Reaktion eingesetzte Katalysator hat üblicherweise eine Korngröße im Bereich von 3 bis 5 mm und die eingesetzten Rohre im Rohrbündelreaktor einen Innendurchmesser von 30 bis 70 mm. Die Reaktion springt bei einer Temperatur von 40 bis 50 °C an, steigt in den Rohren bis auf etwa 580 °C und fällt dann wieder ab. Kohlenmonoxid wird in geringem Überschuss eingesetzt, um zu gewährleisten, dass das gesamte Chlor umgesetzt wird und um chlorfreies Phosgen zu erhalten. Die Reaktion kann drucklos oder unter Druck durchgeführt werden, um zumindest einen Teil des Phosgens bereits mit Kühlwasser kondensieren zu können.

Ein entsprechendes Verfahren ist zum Beispiel in der WO-A 03/072237 beschrieben. Um die Reaktionswärme besser abführen zu können, wird hier ein Reaktor eingesetzt, der ein Bündel von parallel zueinander, in Reaktorlängsrichtung angeordneten Kontaktrohren aufweist, die an ihren Enden in Rohrböden befestigt sind, mit je einer Haube an beiden Enden des Reaktors, sowie mit senkrecht zur Reaktorlängsrichtung im Zwischenraum zwischen den Kontaktrohren angeordneten Umlenkblechen, die alternierend einander gegenüberliegende Durchtrittsöffnungen an der Reaktorinnenwand freilassen, wobei die Kontaktrohre mit dem Feststoffkatalysator befüllt sind, das gasförmige Reaktionsgemisch von einem Reaktorende über eine Haube durch die Kontaktrohre geleitet und vom entgegengesetzten Reaktorende über die zweite Haube abgezogen und durch den Zwischenraum zwischen den Kontaktrohren ein flüssiges Wärmetauschmittel geleitet wird, und wobei der Reaktor im Bereich der Durchtrittsöffnungen unberohrt ist.

Bei den bekannten Verfahren besteht bei Ausfall der Kühlmittelströmung, beispielsweise durch Defekt der Kühlmittelpumpen oder auch bei einem Stromausfall, das Risiko, dass durch die bei der Reaktion freiwerdende Wärme das Kühlmittel verdampft und damit der Druck im Kühlmittelkreislauf stark ansteigt, wodurch der Reaktor geschädigt werden kann. Weiterhin nimmt die Temperatur im Reaktor zu, was insbesondere auf Reaktionsseite zu erheblichen Schäden wie Korrosion bis hin zu Chlorbrand führen kann.

Aufgabe der vorliegenden Erfindung ist es daher, ein Verfahren zur Herstellung von Phosgen durch Gasphasenreaktion von Chlor in Gegenwart eines Feststoffkatalysators bereitzustellen, das im Falle des Ausfalls der Kühlmittelströmung größere Sicherheit bietet und bei dem insbesondere ein starker Druckanstieg im Kühlmittelkreis und Schäden am Reaktor auf Reaktionsseite minimiert oder sogar verhindert werden können.

Diese Aufgabe wird gelöst durch ein Verfahren zur Herstellung von Phosgen durch Gasphasenreaktion von Kohlenmonoxid und Chlor in Gegenwart eines Feststoffkatalysators in einem Rohrbündelreaktor mit von einem Reaktormantel umschlossenen Kontaktrohren, in denen der Feststoffkatalysator aufgenommen ist und die von einem Temperiermedium umströmt werden, und senkrecht zu den Kontaktrohren angeordneten Umlenkblechen, um eine Querströmung des Temperiermediums zu den Kontaktrohren zu erzeugen, umfassend folgende Schritte:

(a) Zufuhr eines Kohlenmonoxid und Chlor enthaltenden Gasgemischs in den Rohrbündelreaktor, so dass das Reaktionsgemisch an einer Seite in die Kontaktrohre eintritt;

(b) Umsetzen des Kohlenmonoxids mit Chlor zu Phosgen in den Kontaktrohren zu einem phosgenhaltigen Produktstrom;

(c) Entnahme des phosgenhaltigen Produktstroms aus dem Rohrbündelreaktor,

wobei die Menge an flüssigem Temperiermedium im Rohrbündelreaktor so groß ist, dass die Temperatur des Temperiermediums bei Ausfall der Strömung des Temperiermediums frühestens nach Ablauf von 90 s den Normalsiedepunkt des Temperiermediums erreicht.

Durch die Menge an Temperiermedium im Rohrbündelreaktor, die so groß ist, dass die Temperatur des Temperiermediums bei Ausfall der Strömung frühestens nach 90 s den Normalsiedepunkt erreicht, verbleibt ausreichend Zeit, um Eduktzuläufe zu schließen und so die Reaktion zu stoppen, bevor das Temperiermedium so weit verdampft, dass der Druck im Kühlkreislauf unzulässig ansteigt und bevor aufgrund steigender Temperaturen in den einzelnen Kontaktrohren aufgrund ungekühlter Fortführung der Reaktion Folgeschäden wie Korrosion oder Chlorbrand auftreten. Auf diese Weise kann die Sicherheit des Verfahren deutlich verbessert werden. Nach dem Schließen der Eduktzufuhr reagiert das noch in den Kontaktrohren enthaltene Kohlenmonoxid mit dem noch enthaltenen Chlor zu Phosgen. Da üblicherweise das Kohlenmonoxid in geringem Überschuss zugegeben wird, endet die Reaktion, sobald das gesamte Chlor mit dem Kohlenmonoxid zu Phosgen umgesetzt wurde. Da keine weiteren Edukte nachgeführt werden, verbleibt bei einem Verschließen der Eduktzufuhr das abschließend erzeugte Phosgen in den Kontaktrohren. Sofern die Strömung des Temperiermediums nicht aufgrund eines allgemeinen Stromausfalls unterbrochen wurde, ist es bevorzugt, wenn im Falle des Ausfalls der Strömung die Eduktzufuhr automatisiert mit einer entsprechenden Regelstrecke zu schließen. Um auch im Fall eines allgemeinen Stromausfalls die Eduktzufuhr schnell zu schließen, ist es bevorzugt, wenn sogenannte "Fail-Safe"-Ventile eingesetzt werden, die bei Stromausfall automatisch schließen. Anderenfalls wäre es notwendig, die Zufuhr schnellstmöglich von Hand zu schließen, wobei für diesen Fall eine Sicherheitsreserve von 90 s im Regelfall äußerst knapp bemessen ist, so dass es bei einer Bedienung des Eduktzulaufs von Hand bevorzugt ist, eine noch größere Menge an flüssigem Temperiermedium vorzuhalten, um die Zeitspanne bis zum Erreichen des Normalsiedepunkts des Temperiermediums weiter zu verlängern.

Als Normalsiedepunkt wird die Siedetemperatur des Temperiermediums bei Normaldruck, das heißt bei 1 bar, bezeichnet.

Die Menge an flüssigem Temperiermedium $m_{TM}$ wird vorzugsweise bestimmt durch:

$$m_{TM} = \frac{\dot{Q} \cdot 90s}{c_p \cdot (T_s - T_{start})}$$

mit bei Nennbetrieb freigesetzter Reaktionswärmemenge $\dot{Q}$ in W, spezifischer Wärmekapazität des Temperiermediums $c_p$ in J/(kgK), Siedetemperatur des Temperiermediums $T_s$ bei Normaldruck und Temperatur des Temperiermediums im Normalbetrieb $T_{start}$ jeweils in K.

Die im Nennbetrieb freigesetzte Reaktionswärme ergibt sich aus der Menge an eingesetzten Edukten, dem Umsatz und der Reaktionsenthalpie der Reaktion von Kohlenmonoxid und Chlor zu Phosgen. So kann die Reaktionswärme Q zum Beispiel aus dem Produkt des Molenstroms an Phosgen am Auslass des Reaktors und der Reaktionsenthalpie oder aus dem Produkt aus Chlorumsatz, Molenstrom an Chlor am Einlass in den Reaktor und der Reaktionsenthalpie bestimmt werden.

Die Temperatur des Temperiermediums im Normalbetrieb ist die Temperatur, auf die sich das Temperiermedium erwärmt, wenn die Reaktion unter stationären Bedingungen bei funktionierendem Kühlkreislauf durchgeführt wird.

Sofern nicht anders angegeben bezeichnet die "Temperatur des Temperiermediums" im Reaktor die mittlere Temperatur

$$T = \frac{T_{ein} + T_{aus}}{2}$$

mit der Temperatur des Temperiermediums am Reaktoreingang $T_{ein}$ und der Temperatur des Temperiermediums $T_{aus}$ am Reaktorausgang.

Um die Sicherheit weiter zu erhöhen und gegebenenfalls mehr Zeit bis zum Ende der Reaktion zu erhalten, ist es weiterhin bevorzugt, wenn die Menge an flüssigem Temperiermedium im Rohrbündelreaktor so groß ist, dass die Temperatur des Temperiermediums bei Ausfall der Strömung des Temperiermediums frühestens nach Ablauf von 90 s eine Temperatur erreicht, die 5 K unterhalb des Normalsiedepunkts liegt und insbesondere eine Temperatur erreicht, die 10 K unterhalb des Normalsiedepunkts liegt. In diesen Fällen wird in der vorstehenden Gleichung zur Bestimmung der Menge des flüssigen Temperiermediums die Siedetemperatur $T_s$ ersetzt durch $T_s$ - 5K beziehungsweise $T_s$ - 10K.

Aus der Menge an flüssigem Temperiermedium und der Dichte kann das notwendige Volumen für das Temperiermedium, das die Kontaktrohre umgibt, bestimmt werden. Dieses Volumen muss von dem die Kontaktrohre umgebenden Raum des Rohrbündelreaktors aufgenommen werden. Dieser Raum umschließt im Allgemeinen ein Volumen, das sich ergibt aus der die Kontaktrohre umgebenden freien Querschnittsfläche des Rohrbündelreaktors und der Länge der Kontaktrohre. Die die Kontaktrohre umgebende freie Querschnittsfläche des Rohrbündelreaktors ist dabei die von der Innenwand des Rohrbündelreaktors umschlossene Fläche senkrecht zum Verlauf der Kontaktrohre abzüglich der Summe der Querschnittsflächen aller Kontaktrohre. Da auch die Umlenkbleche das Volumen des die Kontaktrohre umgebenden Raums verringern, muss weiterhin auch das Volumen der Umlenkbleche abgezogen werden.

Zur Einstellung des Volumens des vom Temperiermedium durchströmten Raums des Rohrbündelreaktors können unterschiedliche Maßnahmen durchgeführt werden. So ist es zum Beispiel möglich, die Teilung im Rohrspiegel so einzustellen, dass die notwendige, die Kontaktrohre umgebende freie Querschnittsfläche erreicht wird. Die Einstellung der Teilung im Rohrspiegel hat den Vorteil, dass der Abstand zwischen den Rohren ausreichend groß ist, so dass eine lokale Überhitzung des Temperiermediums bei Strömungsausfall minimiert oder vermieden werden kann.

Alternativ oder zusätzlich zur Einstellung der Teilung im Rohrspiegel ist es auch möglich, unberohrte Bereiche im Rohrbündelreaktor vorzusehen, die mit Temperiermedium befüllt sind. Derartige unberohrte Bereiche können zum Beispiel die Bereiche sein, an denen sich die Durchtrittsöffnungen in den Umlenkblechen befinden. Um das notwendige Volumen des von Temperiermedium durchströmten Raums einzustellen ist es dabei bei einer kleineren Teilung im Rohrspiegel notwendig, die unberohrten Bereiche zu vergrößern. Alternativ können bei einer größeren Teilung kleinere unberohrte Bereiche vorgesehen sein, solange das Volumen des vom flüssigen Temperiermedium durchströmten Raums ausreichend groß ist, um die notwendige Menge an flüssigem Temperiermedium aufzunehmen. Wenn unberohrte Bereiche vorgesehen sind, ist es besonders bevorzugt, wenn im Bereich von Durchtrittsöffnungen an den Umlenkblechen keine Kontaktrohre angeordnet sind.

Eine weitere Möglichkeit zur Einstellung des Volumens des vom flüssigen Temperiermedium durchströmten Raums ist es, die vom Temperiermedium umströmte Länge der Kontaktrohre entsprechend zu wählen. So ist bei einer kleineren die Kontaktrohre umgebenden freien Querschnittsfläche eine größere Länge der Kontaktrohre erforderlich, um das Volumen für die Aufnahme der notwendigen Menge an flüssigem Temperiermedium zu erhalten. Hierbei ist es jedoch wichtig, dass mit der Zunahme der Länge der Kontaktrohre nicht die zugeführte Eduktmenge im Normalbetrieb erhöht wird.

Um bei einem bereits vorhandenen Rohrbündelreaktor die Reaktion so durchzuführen, dass die Menge an Temperiermedium ausreichend groß ist, dass die Menge an flüssigem Temperiermedium im Rohrbündelreaktor so groß ist, dass die Temperatur des Temperiermediums bei Ausfall der Strömung des Temperiermediums frühestens nach Ablauf von 90 s den Normalsiedepunkt des Temperiermediums erreicht, ist es weiterhin möglich, die massenbezogene Raumgeschwindigkeit (WHSV) im Rohrbündelreaktor anzupassen, im Allgemeinen zu verringern. Dies ist zum Beispiel möglich, indem der zugeführte Eduktmassenstrom reduziert wird.

Die vorgenannten Maßnahmen können entweder unabhängig voneinander jeweils einzeln durchgeführt werden, um die Menge an flüssigem Temperaturmedium einzustellen oder es können zwei oder mehr Maßnahmen kombiniert werden, um die Menge an flüssigem Temperaturmedium einzustellen.

Die Reaktion zur Herstellung von Phosgen aus Kohlenmonoxid und Chlor wird vorzugsweise in einem Reaktor durchgeführt, wie er in WO-A 03/072237 beschrieben ist, wobei durch mindestens eine der vorstehend beschriebenen Maßnahmen das Volumen des vom flüssigen Temperiermedium durchströmten Raums so eingestellt wird, dass die Menge an flüssigem Temperiermedium im Rohrbündelreaktor so groß ist, dass die Temperatur des Temperiermediums bei Ausfall der Strömung des Temperiermediums frühestens nach Ablauf von 90 s den Normalsiedepunkt des Temperiermediums erreicht.

Alternativ zu dem in WO-A 03/072237 beschriebenen Reaktor mit den gegenüberliegenden Durchtrittsöffnungen an der Reaktorinnenwand ist es alternativ zum Beispiel auch möglich, Umlenkbleche einzusetzen, die Abwechselnd jeweils umlaufend an der Reaktorinnenwand und im Zentrum des Umlenkblechs eine Durchtrittsöffnung aufweisen. In diesem Fall strömt das Temperiermedium im Normalbetrieb zunächst von außen zur Mitte des Umlenkblechs, durch die Durchtrittsöffnung in der Mitte des Umlenkblechs auf das darunter liegende Umlenkblech, auf diesem in Richtung Reaktorinnenwand und dann durch die an der Reaktorinnenwand umlaufende Durchtrittsöffnung auf das darunter liegende Umlenkblech, das wieder eine Durchtrittsöffnung in der Mitte aufweist. Da aufgrund der Konstruktion des Rohrbündelreaktors das Temperiermedium üblicherweise über Seitenzuläufe im Reaktormantel zugegeben und entnommen wird, sind in diesem Fall das oberste und das unterste Umlenkblech mit einer Durchtrittsöffnung in der Mitte versehen. Die Zugabestelle und Entnahmestelle für das Temperiermedium befinden sich dabei oberhalb des obersten Umlenkblechs und unterhalb des untersten Umlenkblechs. Neben der vorstehend beschriebenen Strömung von oben nach unten ist es alternativ auch möglich, das Temperiermedium unten zuzugeben und oben zu entnehmen, so dass dieses von unten nach oben strömt.

Um die Sicherheit des Prozesses weiter zu erhöhen, ist es weiterhin bevorzugt, wenn das Temperiermedium eine Flüssigkeit ist, in der sich Kohlenmonoxid, Chlor, Phosgen und gegebenenfalls entstehende Nebenprodukte lösen ohne Bildung von gefährlichen Nebenprodukten. Als gefährliche Nebenprodukte werden dabei alle Reaktionsprodukte verstanden, die bei Reaktion von Kohlenmonoxid, Chlor oder Phosgen mit dem Temperiermedium entstehen können und zu Schäden am Rohrbündelreaktor führen können oder die bei Austritt aus dem Reaktor an einer schadhaften Stelle zu Schäden an Lebewesen oder Umwelt führen können.

Geeignete Temperiermedien sind zum Beispiel Wasser, Decalin, Monochlorbenzol oder auch Wärmeträgeröle wie sie zum Beispiel unter dem Markennamen Marlotherm® der Firma Sasol Germany GmbH oder Galden® HT der Kurt J. Lesker Company vertrieben werden.

Ausführungsbeispiele der Erfindung sind in den Figuren dargestellt und werden in der nachfolgenden Beschreibung näher erläutert.

Es zeigen:

Figur 1        einen Rohrbündelreaktor in einer ersten Ausführungsform,

Figur 2        einen Querschnitt durch einen Rohrbündelreaktor gemäß Figur 1,

Figur 3        einen Rohrbündelreaktor in einer zweiten Ausführungsform,

Figur 4        eine schematische Darstellung der Anordnung der Kontaktrohre in einem Rohrbündelreaktor gemäß Figur 2,

Figuren 5a, 5b        Anordnung der Kontaktrohre.

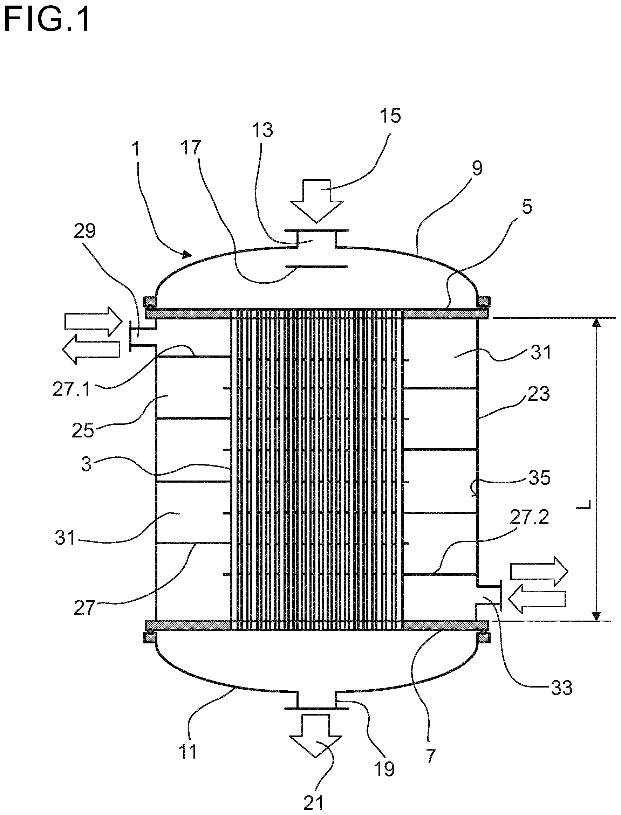

Figur 1 zeigt einen Rohrbündelreaktor in einer ersten Ausführungsform.

Ein Rohrbündelreaktor 1, der zur Herstellung von Phosgen aus Kohlenmonoxid und Chlor eingesetzt wird, umfasst ein Bündel Kontaktrohre 3, die parallel zueinander in Längsrichtung des Rohrbündelreaktors 1 angeordnet sind. An ihrem oberen Enden sind die Kontaktrohre 3 mit einem oberen Rohrboden 5 und an ihrem unteren Ende mit einem unteren Rohrboden 7 gas- und flüssigkeitsdicht verbunden.

Am oberen Ende ist der Rohrbündelreaktor 3 mit einer oberen Haube 9 verschlossen und am unteren Ende mit einer unteren Haube 11. Die obere Haube 9 weist einen Zulauf 13 auf, über den ein Eduktstrom 15, der Kohlenmonoxid und Chlor enthält, zugeführt wird. Damit bei der Reaktion zu Phosgen das Chlor vollständig abreagiert, ist es bevorzugt, das Kohlenmonoxid im Überschuss zuzuführen. Um den Eduktstrom 15 gleichmäßig auf die Kontaktrohre 3 zu verteilen, ist in der oberen Haube 9 vorzugsweise ein Gasverteiler 17 angeordnet. Mit Hilfe des Gasverteilers 17 wird das als Eduktstrom 15 zugeführte Gasgemisch gleichmäßig unterhalb der oberen Haube 9 verteilt und strömt dann in die Kontaktrohre 3.

Nach dem Durchströmen der Kontaktrohre 3 wird das in den Kontaktrohren 3 erzeugte Rohprodukt in der unteren Haube 11 gesammelt und über einen Abzug 19 als Rohproduktstrom 21 entnommen.

Da die Reaktion in Gegenwart eines Feststoffkatalysators durchgeführt wird, sind die Kontaktrohre 3 mit dem Feststoffkatalysator befüllt. Als Feststoffkatalysator wird vorzugsweise Aktivkohle in Form einer Katalysatorschüttung eingesetzt. Die Katalysatorschüttung in den Kontaktrohren 3 weist bevorzugt ein äußeres Lückenvolumen von 0,33 bis 0,5 und insbesondere von 0,33 bis 0,4 auf. Die Katalysatorpartikel, die in der Katalysatorschüttung eingesetzt werden, weisen üblicherweise ein inneres Lückenvolumen von 0,6 bis 0,7 auf.

Das Lückenvolumen ε bestimmt sich dabei zu:

$$\varepsilon = \frac{\rho - \rho_s}{\rho}$$

Für das innere Lückenvolumen wird für $\rho$ dabei die Dichte des Feststoffs eingesetzt und für $p_s$ die Dichte eines Katalysatorpartikels. Für das äußere Lückenvolumen wird für $\rho$ die Dichte eines Katalysatorpartikels eingesetzt und für $\rho_s$ die Schüttdichte der Katalysatorschüttung.

Die Reaktion von Kohlenmonoxid und Chlor zu Phosgen ist stark exotherm, so dass es notwendig ist, die Kontaktrohre 3 zu kühlen. Hierzu weist der Rohrbündelreaktor 1 einen Reaktormantel 23 auf, der das Bündel der Kontaktrohre 3 umschließt. Auf diese Weise begrenzt der Reaktormantel 23 einen Raum 25, der im Normalbetrieb von einem Temperiermedium durchströmt wird. Das Temperiermedium nimmt bei der Reaktion erzeugte Wärme auf, die dann in einem Wärmetauscher im Kühlkreislauf abgegeben wird.

Um die Kontaktrohre 3 möglichst effektiv zu kühlen, ist es vorteilhaft, wenn das Temperiermedium quer zum Verlauf der Kontaktrohre 3 strömt. Hierzu sind in dem die Kontaktrohre 3 umgebenden Raum 25 Umlenkbleche 27 aufgenommen, die senkrecht zu den Kontaktrohren 3 ausgerichtet sind. Das Temperiermedium strömt so parallel zum Verlauf der Umlenkbleche 27 von einem Zulauf 29 zunächst zwischen oberem Rohrboden 5 und dem obersten Umlenkblech 27.1 zu einer Durchtrittsöffnung 31, durch die das Temperiermedium auf das darunter liegende Umlenkblech 27 strömt und dann jeweils zwischen zwei Umlenkblechen zur nächsten Durchtrittsöffnung 31 bis das Temperiermedium nach dem Durchströmen der Durchtrittsöffnung 31 am untersten Umlenkblech 27.2 zwischen dem untersten Umlenkblech 27.2 und dem unteren Rohrboden 7 zu einem Ablauf 33 strömt.

Alternativ zu der vorstehend beschriebenen Strömung des Temperiermediums von oben nach unten ist es auch möglich, dass das Temperiermedium über den Ablauf 33 zugeführt wird und über den Zulauf 31 entnommen wird, so dass die Funktion von Zulauf und Ablauf vertauscht ist und das Temperiermedium in entgegengesetzter Richtung von unten nach oben strömt.

Für eine gleichmäßige Kühlung aller Kontaktrohre 3 ist es bevorzugt, wenn im Bereich der Durchtrittsöffnungen 31 keine Kontaktrohre im Rohrbündelreaktor positioniert sind. Auf diese Weise wird sichergestellt, dass alle Kontaktrohre quer zu ihrem Verlauf vom Temperiermedium angeströmt werden.

Der Rohrbündelreaktor 1 ist vorzugsweise so gestaltet, dass dieser 100 bis 10000, insbesondere 1000 bis 3500 Kontaktrohre 3 enthält. Die Kontaktrohre sind dabei vorzugsweise aus einem korrosionsfesten Material, beispielsweise Edelstahl, insbesondere Duplexstahl 1.4462, Edelstahl 1.4571 oder Edelstahl 1.4541, oder einer Nickelbasislegierung, insbesondere Hastelloy® oder Inconel®, gefertigt. Besonders bevorzugt ist der gesamte Rohrbündelreaktor 1 aus einem dieser Werkstoffe gebildet. Alternativ zur Verwendung von korrosionsfestem Material ist es auch möglich, alle Oberflächen, die mit dem Reaktionsgemisch in Kontakt kommen sowie alle Oberflächen, die mit dem Temperiermedium in Kontakt kommen, insbesondere die Oberflächen, die mit dem Reaktionsgemisch in Kontakt kommen, mit einer korrosionsfesten und hitzebeständigen Beschichtung, beispielsweise Email, zu versehen. Bevorzugt ist es jedoch, die Kontaktrohre 3 und insbesondere den gesamten Rohrbündelreaktor 1 aus einem korrosionsfesten Material, insbesondere Duplexstahl oder Edelstahl zu fertigen.

Jedes Kontaktrohr 3 weist vorzugsweise eine Wandstärke im Bereich von 2 bis 4 mm, insbesondere von 2,5 bis 3 mm, und einen Rohrinnendurchmesser im Bereich von 20 bis 90 mm, insbesondere im Bereich von 30 bis 50 mm auf. Der Außendurchmesser der Kontaktrohre liegt somit vorzugsweise im Bereich von 24 bis 98 mm und insbesondere im Bereich von 35 bis 58 mm. Die Länge L der Kontaktrohre 3 liegt vorzugsweise im Bereich von 1,5 bis 6 m, insbesondere im Bereich von 2 bis 4 m.

Der Reaktormantel 23 kann jede beliebige Querschnittsform aufweisen, bevorzugt hat der Reaktormantel 23 jedoch einen kreisförmigen Querschnitt, so dass der Rohrbündelreaktor 1 im Bereich zwischen dem oberen Rohrboden 5 und dem unteren Rohrboden 7 zylinderförmig ist. Bei einer solchen zylinderförmigen Gestaltung des Rohrbündelreaktors 1 beträgt der Innendurchmesser vorzugsweise 0,5 bis 6 m und insbesondere 1 bis 4 m.

in der in Figur 1 dargestellten Ausführungsform befinden sich die Durchtrittsöffnungen 31 von übereinander angeordneten Umlenkblechen jeweils alternierend auf gegenüberliegenden Seiten an der Reaktorinnenwand 35.

Um im Falle des Ausfalls der Strömung des Temperiermediums die Reaktion beenden zu können, bevor Schäden am Rohrbündelreaktor auftreten, ist der Raum 25 erfindungsgemäß so groß, dass das darin enthaltene Temperiermedium bei Ausfall der Strömung frühestens nach Ablauf von 90 s den Normalsiedepunkt des Temperiermediums erreicht.

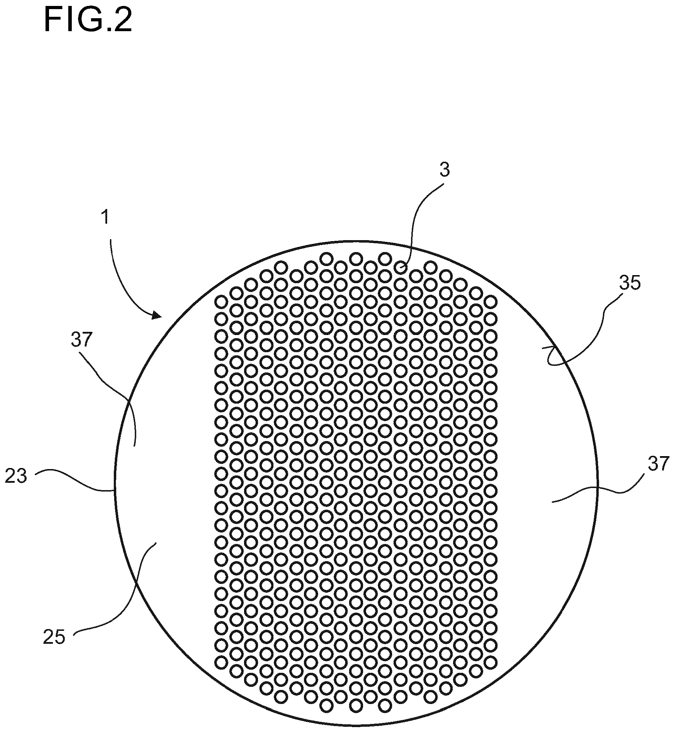

Um das Volumen des Raums 25 ausreichend groß zu gestalten, damit dieser die notwendige Menge an Temperiermedium aufnehmen kann, damit dieses frühestens nach Ablauf von 90 s den Normalsiedepunkt des Temperiermediums erreicht, muss in Abhängigkeit von der Länge L der Kontaktrohre 3 die freie Querschnittsfläche des Raums 25 ausreichend groß sein. Die freie Querschnittsfläche ergibt sich dabei aus der von der Reaktorinnenwand 35 umschlossenen Fläche quer zum Verlauf der Kontaktrohre abzüglich der Fläche, die von den Kontaktrohren 3 eingenommen wird. In Figur 2, die einen Querschnitt des in Figur 1 dargestellten Rohrbündelreaktors 1 zeigt, ist diese Fläche die Fläche, die sich innerhalb der Reaktorinnenwand 35 und außerhalb der Kontaktrohre 3 befindet. Durch die großen unberohrten Flächen 37 im Bereich der Durchtrittsöffnungen 31 wird bereits ein deutlich größeres Volumen erzielt, das vom Temperiermedium eingenommen werden kann als bei einem Rohrbündelapparat, der vollständig mit Rohren ausgefüllt ist. Um ein ausreichend großes Volumen für das Temperiermedium zu erhalten ist es möglich, die unberohrten Flächen 37 im Bereich der Durchtrittsöffnungen 31 zu vergrößern oder den Abstand zwischen den Kontaktrohren 3.

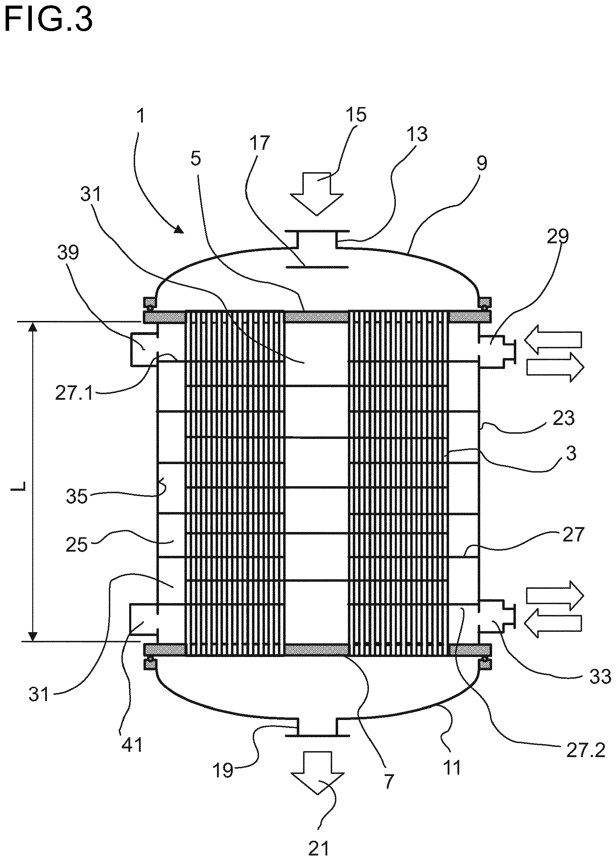

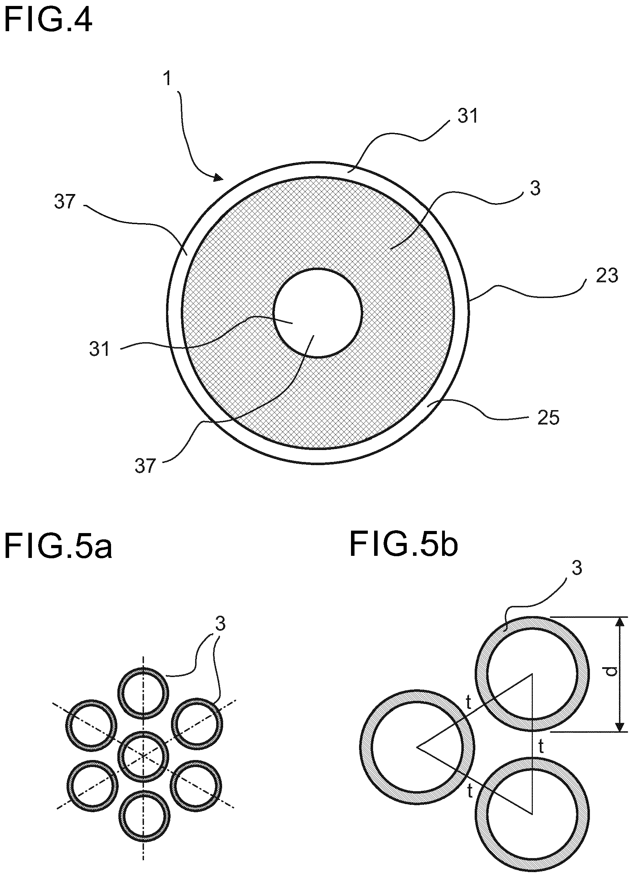

In den Figuren 3 und 4 ist ein Rohrbündelreaktor in einer zweiten Ausführungsform dargestellt, wobei Figur 3 ein Längsschnitt durch den Rohrbündelreaktor 3 zeigt und Figur 3 einen Querschnitt.

Im Unterschied zu dem in den Figuren 1 und 2 dargestellten Rohrbündelreaktor 1 sind bei dem in den Figuren 3 und 4 dargestellten Rohrbündelreaktor die Durchtrittsöffnungen 31 nicht alternierend gegenüberliegend an der Reaktorinnenwand ausgebildet, sondern abwechselnd einmal in der Mitte des Umlenkblechs 27 und einmal umlaufend am Rand des Umlenkblechs 31. Auf diese Weise strömt das Temperiermedium zunächst zur Mitte des obersten Umlenkblechs 27.1, durch die Durchtrittsöffnung 31 in der Mitte, über das darunter liegende Umlenkblech 27 zum Rand, durch umlaufende Durchtrittsöffnung 31 am Rand auf das darunter liegende Umlenkblech 27 und auf diesem wieder zur Mitte, so dass das Temperiermedium mäandernd vom Rand zur Mitte und wieder zurück strömt. Das unterste Umlenkblech 27.1 hat vorzugsweise die Durchtrittsöffnung in der Mitte, so dass das Temperiermedium zum Rand strömt und von dort zum Ablauf 33. Für eine gleichmäßige Zufuhr und Abfuhr des Temperiermediums ist es bei der in den Figuren 3 und 4 dargestellten Ausführungsform bevorzugt, wenn das Temperiermedium vom Zulauf 29 zunächst in einen Ringkanal 39 strömt und über den Ringkanal 39 in den Raum 25, der die Kontaktrohre 3 umgibt. Nach dem mäandernden Durchströmen des Raums 25 strömt das Temperiermedium dann in einen zweiten Ringkanal 41 und durch den Ringkanal 41 zum Ablauf 33, über den das Temperiermedium entnommen wird. Durch die Ringkanäle 39, 41 wird sichergestellt, dass auch oberhalb des obersten Umlenkblechs 27.1 und unterhalb des untersten Umlenkblechs 27.2 alle Kontaktrohre mit dem Temperiermedium umströmt werden und das Temperiermedium nicht direkt zum Ablauf 33 strömt.

Die Kontaktrohre 3 sind vorzugsweise in Dreiecksteilung im Rohrbündelreaktor angeordnet. Dies ist schematisch für wenige Kontaktrohre 3 in den Figuren 5a und 5b dargestellt.

Bei einer Dreiecksteilung in Form eines gleichseitigen Dreiecks umschließen jeweils sechs Kontaktrohre 3 ein siebtes Kontaktrohr 3. Die Abstände sowohl zwischen benachbarten Kontaktrohren 3, die das siebte Kontaktrohr 3 umschließen als auch die Abstände zwischen den umschließenden Kontaktrohren und dem siebten Kontaktrohr sind jeweils gleich groß und werden als Teilung t bezeichnet. Diese ist beispielhaft für drei Kontaktrohre 3 in Figur 5b dargestellt. Die Kontaktrohre 3 haben dabei jeweils einen Außendurchmesser d und die Teilung t ist die Strecke zwischen den Mittelpunkten zweier benachbarter Kontaktrohre 3. Damit sich benachbarte Kontaktrohre nicht berühren, so dass diese von dem Temperiermedium umströmt werden können, ist es notwendig, dass die Teilung t größer ist als der Außendurchmesser d der Kontaktrohre 3.

Beispiele:

Vergleichsbeispiel 1:

Zur Herstellung von 10 t/h Phosgen wird ein Rohrbündelreaktor eingesetzt, der 1256 Kontaktrohre mit einem Außendurchmesser von 44,5 mm und einer Länge von 2,5 m enthält. die Teilung des Rohrspiegels beträgt 55 mm und der Rohrbündelreaktor hat einen Innendurchmesser von 2,05 m. Hieraus ergibt sich eine Menge an Temperiermedium im Rohrbündelreaktor von etwa 3 $m^3$. Als Temperiermedium wird Monochlorbenzol mit einer mittleren Temperatur im Rohrbündelreaktor im Normalbetrieb von 80°C eigesetzt. Mit einer Dichte von 1044 $kg/m^3$ ergibt sich damit eine Menge von etwa 3,15 t Monochlorbenzol im Rohrbündelreaktor. Bei der Herstellung von 10 t/h Phosgen wird bei einer Reaktionswärme von etwa 110 kJ/mol eine Wärmemenge von etwa 3,09 MW freigesetzt. Der Normalsiedepunkt von Monochlorbenzol beträgt 132°C. Mit einer Wärmekapazität von ca. 1417 J/kgK ergibt sich damit eine Aufheizung des Monochlorbenzols im Reaktor von 80°C auf 132°C in ca. 75 s.

Vergleichsbeispiel 2 nach WO-A 2003/072237:

Ein Reaktor zur Herstellung von 10 t/h Phosgen ist als Rohrbündelreaktor mit 1256 Rohren mit einem Außendurchmesser von 44,5 mm und einer Rohrlänge von 3 m ausgeführt. Der Rohranteil mit Kontakt zum Temperiermedium (Gesamtrohrlänge abzüglich der Dicke der Rohrböden sowie der Umlenkbleche) beträgt 2,5 m. Die Teilung des Rohrspiegels beträgt 51 mm entsprechend einem Reaktor-Innendurchmesser von ca. 1,90 m. Der Hold-up an Temperiermedium im Reaktor beträgt etwa 1,9 $m^3$. Als Temperiermedium wird Monochlorbenzol mit einer mittleren Temperatur im Reaktor von 80°C eingesetzt. Mit einer Dichte von 1044 $kg/m^3$ ergibt sich eine Menge von ca. 1,99 t innerhalb des Reaktors. Bei der Herstellung von 10 t/h Phosgen wird bei einer Reaktionswärme von ca. 110 kJ/mol eine Wärmemenge von ca. 3,09 MW freigesetzt. Mit der Wärmekapazität von Monochlorbenzol von ca. 1417 J/kgK ergibt sich eine Aufheizung des Monochlorbenzols von 80°C auf 132°C in ca. 47s.

Vergleichsbeispiel 3 nach WO-A 2003/072237:

Durch Einführung eines unberohrten Bereichs entsprechend WO-A 2003/072237 von ca. 15% der Gesamtquerschnittsfläche des Reaktors bei gleichbleibender Anzahl der Rohre und der Teilung von 51 mm vergrößert sich der Reaktordurchmesser auf 2,06 m und der Hold-up an Temperiermedium auf 3,13 $m^3$ entsprechend 3,27 t Monochlorbenzol. Die Aufheizzeit des Monochlorbenzols von 80°C auf 132°C beträgt ca. 78 s.

Beispiel 1:

Der unberohrte Bereich im Bereich der Durchtrittsöffnungen der Umlenkbleche wird auf etwa 15% der Gesamtquerschnittsfläche des Rohrbündelreaktors vergrößert. Hierdurch vergrößert sich der Reaktordurchmesser auf 2,22 m bei gleicher Anzahl an Kontaktrohren und der im Vergleich zu Vergleichsbeispiel 1 gleichbleibenden Teilung von 55 mm und damit die Menge an Temperiermedium im Rohrbündelreaktor auf 4,43 $m^3$, entsprechend 4,63 t Monochlorbenzol. Die Aufheizzeit des Monochlorbenzols von 80°C auf 132°C verlängert sich dadurch auf etwa 110 s.

Beispiel 2:

Im Reaktor nach Vergleichsbeispiel 2 wird die Teilung des Rohrspiegels von 51 mm auf 58 mm erhöht. Der Reaktordurchmesser steigt auf 2,17 m und der Hold-up an Temperiermedium auf 3,9 $m^3$ respektive 4,07 t Monochlorbenzol. Die Aufheizzeit des Monochlorbenzols verlängert sich auf 97 s.

Beispiel 3:

Im Reaktor nach Vergleichsbeispiel 3 wird der Anteil des unberohrten Bereiches an der Gesamtquerschnittsfläche des Reaktors auf 20% erhöht. Der Reaktordurchmesser steigt auf 2,12 m und der Hold-up an Temperiermedium auf 3,64 $m^3$, respektive 3,8 t Monochlorbenzol. Die Aufheizzeit des Monochlorbenzols verlängert sich auf 90,6 s.

Beispiel 4 ( Erhöhte Rohrlänge ):

Im Reaktor nach Vergleichsbeispiel 3 wird bei gleichem Flächenanteil des unberohrten Bereiches die Rohrlänge auf 3,5 m entsprechend einer Rohrlänge mit Kontakt zum Temperiermedium von 3 m erhöht. Der Hold-up an Temperiermedium steigt auf 3,82 $m^3$, respektive 4,0 t Monochlorbenzol. Die Aufheizzeit des Monochlorbenzols verlängert sich auf 95 s.

Beispiel 5 ( Kombination von Maßnahmen):

Im Reaktor nach Vergleichsbeispiel 3 werden der Flächenanteil des unberohrten Bereiches auf 18%, die Teilung auf 52 mm und die Rohrlänge auf 3,3 m (2,8 m mit Kontakt zum Temperiermedium) erhöht. Der Hold-up an Temperiermedium steigt auf 4,82 $m^3$ bzw. 5,0 t Monochlorbenzol. Die Aufheizzeit des Monochlorbenzols verlängert sich auf 120 s.

Beispiel 6:

Im Vergleich zum Vergleichsbeispiel 1 wird die Teilung von 55 mm auf 60 mm erhöht. Damit vergrößert sich der Reaktorinnendurchmesser auf 2,23 m entsprechend einem Hold-up an Temperiermedium von 4,51 m$^3$ bzw. 4,71 t Monochlorbenzol. Die Aufheizzeit des Monochlorbenzols von 80°C auf 132°C verlängert sich auf ca. 112 s.

Beispiel 7:

Abweichend zum Vergleichsbeispiel 1 wird die Rohrlänge von 2,5 m auf 3 m erhöht. Bei gleichem Reaktordurchmesser erhöht sich Hold-up an Temperiermedium auf 3,7 m$^3$ entsprechend 3,84 t Monochlorbenzol. Die Aufheizzeit des Monochlorbenzols von 80°C auf 132°C beträgt ca. 92 s.

Bezugszeichenliste

| | |
|---|---|
| 1 | Rohrbündelreaktor |
| 3 | Kontaktrohr |
| 5 | oberer Rohrboden |
| 7 | unterer Rohrboden |
| 9 | obere Haube |
| 11 | untere Haube |
| 13 | Zulauf |
| 15 | Eduktstrom |
| 17 | Gasverteiler |
| 19 | Abzug |
| 21 | Rohproduktstrom |
| 23 | Reaktormantel |
| 25 | Raum |
| 27 | Umlenkblech |
| 27.1 | oberstes Umlenkblech |
| 27.2 | unterstes Umlenkblech |
| 29 | Zulauf |
| 31 | Durchtrittsöffnung |
| 33 | Ablauf |
| 35 | Reaktorinnenwand |
| 37 | unberohrte Fläche |
| 39 | Ringkanal |
| 41 | zweiter Ringkanal |

**Patentansprüche**

1. Verfahren zur Herstellung von Phosgen durch Gasphasenreaktion von Kohlenmonoxid und Chlor in Gegenwart eines Feststoffkatalysators in einem Rohrbündelreaktor (1) mit von einem Reaktormantel (23) umschlossenen Kontaktrohren (3), in denen der Feststoffkatalysator aufgenommen ist und die von einem Temperiermedium umströmt werden, und senkrecht zu den Kontaktrohren (3) angeordneten Umlenkblechen (27), um eine Querströmung des Temperiermediums zu den Kontaktrohren (3) zu erzeugen, umfassend folgende Schritte:

(a) Zufuhr eines Kohlenmonoxid und Chlor enthaltenden Gasgemischs in den Rohrbündelreaktor (1), so dass das Reaktionsgemisch an einer Seite in die Kontaktrohre (3) eintritt;
(b) Umsetzen des Kohlenmonoxids mit Chlor zu Phosgen in den Kontaktrohren (3) zu einem phosgenhaltigen Produktstrom;
(c) Entnahme des phosgenhaltigen Produktstroms aus dem Rohrbündelreaktor (1),

**dadurch gekennzeichnet, dass** die Menge an flüssigem Temperiermedium im Rohrbündelreaktor (1) so groß ist, dass die Temperatur des Temperiermediums bei Ausfall der Strömung des Temperiermediums frühestens nach Ablauf von 90 s den Normalsiedepunkt des Temperiermediums erreicht.

2. Verfahren gemäß Anspruch 1, **dadurch gekennzeichnet, dass** die Mindestmenge an flüssigem Temperiermedium bestimmt wird durch:

$$m_{TM} = \frac{\dot{Q} \cdot 90s}{c_p \cdot (T_s - T_{start})}$$

mit bei Nennbetrieb freigesetzter Reaktionswärme Q, spezifischer Wärmekapazität des Temperiermediums $c_p$, Siedetemperatur des Temperiermediums $T_s$ bei Normaldruck und Temperatur des Temperiermediums im Normalbetrieb $T_{start}$.

3. Verfahren gemäß Anspruch 1 oder 2, **dadurch gekennzeichnet, dass** das Volumen zur Aufnahme der notwendigen Menge an flüssigem Temperiermedium bestimmt wird durch die die Kontaktrohre (3) umgebende freie Querschnittsfläche des Rohrbündelreaktors (1) und die Länge (L) der Kontaktrohre (3).

4. Verfahren gemäß einem der Ansprüche 1 bis 3, **dadurch gekennzeichnet, dass** die die Kontaktrohre (3) umgebende freie Querschnittsfläche durch den Außendurchmesser der Kontaktrohre (3), die Teilung und/oder die Größe von unberohrten Bereichen des Rohrbündelreaktors (1) bestimmt wird.

5. Verfahren gemäß einem der Ansprüche 1 bis 4, **dadurch gekennzeichnet, dass** im Bereich von Durchtrittsöffnungen an den Umlenkblechen keine Kontaktrohre angeordnet sind.

6. Verfahren gemäß einem der Ansprüche 1 bis 5, **dadurch gekennzeichnet, dass** das Temperiermedium eine Flüssigkeit ist, in der sich Kohlenmonoxid, Chlor, Phosgen und gegebenenfalls entstehende Nebenprodukte lösen ohne Bildung von gefährlichen Nebenprodukten.

7. Verfahren gemäß einem der Ansprüche 1 bis 6, **dadurch gekennzeichnet, dass** das Temperiermedium ausgewählt ist aus Wasser, Decalin, Monochlorbenzol und Wärmeträgerölen.

**Claims**

1. A process for producing phosgene by gas phase reaction of carbon monoxide and chlorine in the presence of a solid-state catalyst in a shell-and-tube reactor (1) comprising catalyst tubes (3) which are surrounded by a reactor shell (23) and which accommodate the solid-state catalyst and around which a temperature control medium flows, and baffle plates (27) arranged at right angles to the catalyst tubes (3) in order to generate crossflow of the temperature control medium with respect to the catalyst tubes (3), comprising the following steps:

   (a) feeding a gas mixture comprising carbon monoxide and chlorine into the shell-and-tube reactor (1), such that the reaction mixture enters the catalyst tubes (3) at one end;
   (b) reacting the carbon monoxide with chlorine to give phosgene in the catalyst tubes (3) to give a phosgene-containing product stream;
   (c) withdrawing the phosgene-containing product stream from the shell-and-tube reactor (1),

   wherein the amount of liquid temperature control medium in the shell-and-tube reactor (1) is sufficiently large that the temperature of the temperature control medium in the event of failure of the temperature control medium flow reaches the normal boiling point of the temperature control medium no earlier than after 90 **s.**

2. The process according to claim 1, wherein the minimum amount of liquid temperature control medium is determined by:

$$m_{TM} = \frac{\dot{Q} \cdot 90s}{c_p \cdot (T_s - T_{start})}$$

with heat of reaction Q released in nameplate operation, specific heat capacity of the temperature control medium $c_p$, boiling temperature of the temperature control medium $T_s$ at standard pressure and temperature of the temperature control medium in normal operation $T_{start}$.

3. The process according to claim 1 or 2, wherein the volume for accommodation of the necessary amount of liquid temperature control medium is determined by the free cross-sectional area of the shell-and-tube reactor (1) surrounding the catalyst tubes (3) and the length (L) of the catalyst tubes (3).

4. The process according to any of claims 1 to 3, wherein the free cross-sectional area surrounding the catalyst tubes (3) is determined by the external diameter of the catalyst tubes (3), the pitch and/or the size of tubeless regions of the shell-and-tube reactor (1).

5. The process according to any of claims 1 to 4, wherein there are no catalyst tubes disposed in the region of passage openings in the baffle plates.

6. The process according to any of claims 1 to 5, wherein the temperature control medium is a liquid in which carbon monoxide, chlorine, phosgene and any byproducts formed are dissolved without formation of hazardous by-products.

7. The process according to any of claims 1 to 6, wherein the temperature control medium is selected from water, decalin, monochlorobenzene and heat carrier oils.

**Revendications**

1. Procédé de production de phosgène par réaction en phase gazeuse de monoxyde de carbone et de chlore en présence d'un catalyseur solide dans un réacteur à faisceau de tubes (1) avec des tubes de contact (3) entourés d'une enveloppe de réacteur (23), dans lesquels est logé le catalyseur solide et autour desquels s'écoule un milieu de thermorégulation, et des tôles de déviation (27) agencées perpendiculairement aux tubes de contact (3), afin de produire un écoulement transversal du milieu de thermorégulation vers les tubes de contact (3), comprenant les étapes suivantes :

   (a) l'amenée d'un mélange gazeux contenant du monoxyde de carbone et du chlore dans le réacteur à faisceau de tubes (1) de telle sorte que le mélange réactionnel pénètre dans les tubes de contact (3) d'un côté ;
   (b) la mise en réaction du monoxyde de carbone avec du chlore pour former du phosgène dans les tubes de contact (3) pour obtenir un courant de produit contenant du phosgène ;
   (c) le soutirage du courant de produit contenant du phosgène du réacteur à faisceau de tubes (1),

**caractérisé en ce que** la quantité de milieu de thermorégulation liquide dans le réacteur à faisceau de tubes (1) est telle que la température du milieu de thermorégulation atteint le point d'ébullition normal du milieu de thermorégulation au plus tôt après l'écoulement de 90 s en cas de défaillance de l'écoulement du milieu de thermorégulation.

2. Procédé selon la revendication 1, **caractérisé en ce que** la quantité minimale de milieu de thermorégulation liquide est déterminée par :

$$m_{TM} = \frac{\dot{Q} \cdot 90s}{c_p \cdot (T_s - T_{start})}$$

avec la chaleur de réaction Q libérée en fonctionnement nominal, la capacité thermique spécifique du milieu de thermorégulation $c_p$, la température d'ébullition du milieu de thermorégulation $T_s$ à pression normale et la température du milieu de thermorégulation en fonctionnement normal $T_{start}$.

3. Procédé selon la revendication 1 ou 2, **caractérisé en ce que** le volume destiné à recevoir la quantité nécessaire de milieu de thermorégulation liquide est déterminé par la surface de section transversale libre du réacteur à faisceau de tubes (1) entourant les tubes de contact (3) et par la longueur (L) des tubes de contact (3).

4. Procédé selon l'une quelconque des revendications 1 à 3, **caractérisé en ce que** la surface de section transversale libre entourant les tubes de contact (3) est déterminée par le diamètre extérieur des tubes de contact (3), l'écartement et/ou la taille des zones sans tube du réacteur à faisceau de tubes (1).

5. Procédé selon l'une quelconque des revendications 1 à 4, **caractérisé en ce qu'**aucun tube de contact n'est agencé dans la zone des ouvertures de passage sur les tôles de déviation.

6. Procédé selon l'une quelconque des revendications 1 à 5, **caractérisé en ce que** le milieu de thermorégulation est un liquide dans lequel le monoxyde de carbone, le chlore, le phosgène et les sous-produits éventuellement formés se dissolvent sans former de sous-produits dangereux.

7. Procédé selon l'une quelconque des revendications 1 à 6, **caractérisé en ce que** le milieu de thermorégulation est choisi parmi l'eau, la décaline, le monochlorobenzène et les huiles caloporteuses.

# FIG.1

# FIG.2

# FIG.3

## FIG.4

## FIG.5a

## FIG.5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03072237 A

- WO 2003072237 A

**In der Beschreibung aufgeführte Nicht-Patentliteratur**

- Ullmann's Encyclopedia of Industrial Chemistry. Wiley-VCH Verlag GmbH & Co. KGaA, 625-626